(19) Europäisches Patentamt
European Patent Office
Office européen des brevets

(11) Veröffentlichungsnummer: **0 019 776**
**B1**

(12) # EUROPÄISCHE PATENTSCHRIFT

(45) Veröffentlichungstag der Patentschrift: **01.02.84**

(51) Int. Cl.³: **C 08 G 18/14**, C 08 K 5/06, D 06 N 3/08

(21) Anmeldenummer: **80102551.1**

(22) Anmeldetag: **09.05.80**

(54) **Verfahren zur antistatischen Ausrüstung von Polyurethan-Schäumen und deren Verwendung.**

(30) Priorität: **17.05.79 DE 2919975**

(43) Veröffentlichungstag der Anmeldung: **10.12.80 Patentblatt 80/25**

(45) Bekanntmachung des Hinweises auf die Patenterteilung: **01.02.84 Patentblatt 84/5**

(84) Benannte Vertragsstaaten: **AT BE CH FR GB IT LI LU NL SE**

(56) Entgegenhaltungen:
**DE - B - 1 159 637**
**DE - B - 1 292 408**

**PLASTVERARBEITER, Band 28, Nr. 5, 1977 Speyer, "Zusatzstoffe für Kunststoffe" Seiten 247 bis 254**

(73) Patentinhaber: **Chemische Fabrik Stockhausen GmbH, Bäkerpfad 25, D-4150 Krefeld (DE)**

(72) Erfinder: **Dahmen, Kurt, Dr. Dipl.-Chem., Von-Velsen-Strasse 6, D-4050 Mönchengladbach 2 (DE)**
Erfinder: **Pfabe, Siegfried, Walbecker Strasse 4, D-4170 Geldern 3 (DE)**

(74) Vertreter: **Klöpsch, Gerald, Dr.-Ing., An Gross St. Martin 6, D-5000 Köln 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Verfahren zur antistatischen Ausrüstung von Polyurethan-Schäumen und deren Verwendung

Die Erfindung betrifft die antistatische Ausrüstung von Polyurethan-Schäumen, insbesondere Polyurethan-Schäumen, die als Textilbeschichtungsmassen wie Teppichrückenbeschichtungsmassen eingesetzt werden, unter Verwendung von endständigen veresterten oder veretherten Alkylenoxidaddukten.

Es ist bekannt, daß textile Flächengebilde, insbesondere aus synthetischem Material, bei geringer Luftfeuchtigkeit zur elektrostatischen Aufladung neigen, wodurch ihre Verwendbarkeit erheblich beeinträchtigt wird. Vor allem die elektrostatische Aufladung von Teppichen führt zu empfindlichen Funktionsstörungen bei elektronischen Apparaten (z. B. Datenverarbeitungsanlagen) sowie zu unangenehmen Entladungserscheinungen an Lebewesen.

Es hat nicht an Versuchen gefehlt, Fasermaterialien zu entwickeln, die entweder aufgrund der chemischen Zusammensetzung der Fasermasse oder durch die Verwendung bestimmter Additive antistatische Eigenschaften aufweisen sollten. Zu diesem Zweck wurden auch Metallfäden in die Fasergarne eingesponnen.

Es ist aber festzustellen, daß auch bei günstiger fertigungsbedingter Oberflächenstruktur der textilen Flächengebilde der antistatische Effekt für sich allein nicht ausreicht, auch wenn sich z. B. Schlingenteppichware wegen der durchgehenden Längsrichtung des antistatischen Garnes hinsichtlich der elektrostatischen Eigenschaften günstiger verhält als Veloursware, bei der durch das Schneiden und Scheren des Pols der Garnverlauf bei jeder Schlaufe unterbrochen ist. Es ist daher noch stets, vor allem bei Veloursware, erforderlich, auch die Rückenbeschichtung leitfähig zu machen.

Nach den bisherigen, konventionellen Verfahren wurden Beschichtungsmassen auf der Basis von Natur- und Kunststofflatices verwendet, für die geeignete antistatischmachende Additive bekannt sind. Hierbei handelt es sich im wesentlichen um Metallpulver, leitfähige Ruße oder wasserlösliche Salze, zum Teil in polymerer Form, wie sie z. B. in der DE-AS 2 529 939 beschrieben sind.

In den letzten Jahren wurde sowohl aus technischen als auch kommerziellen Gründen ein neuer Beschichtungsprozeß für Teppiche auf der Basis von Polyurethan-Schaum entwickelt. Bisher sind zwei Verfahren bekannt:

1. das BAYER/Metzeler-Verfahren, das in MELLIAND Textilberichte, 4, 1975, S. 314, beschrieben ist und

2. das ICI-Fleissner-Verfahren, über das in Chemiefasern/Textilindustrie, März 1977, S. 250
MELLIAND Textilberichte, 4, 1977, S. 335 – 336,
Chemiefasern/Textilberichte, Oktober 1976, S. 905 – 910,
berichtet wird.

Bei diesen Verfahren wird auf der Rückseite der Teppichware die Polyurethan-Reaktionsmasse, die entweder mittels einer Trommel im Umkehrverfahren aufgebracht oder aufgesprüht wird, aufgeschäumt. Gleichzeitig mit der Bildung des Schaumrückens wird die Verankerung der Teppichnoppen bewirkt.

Als Reaktionskomponenten werden vorwiegend Polyether als Diolkomponente und Toluylendiisocyanat (TDI) bzw. Diphenylmethandiisocyanat (MDI) als Isocyanat-Typen eingesetzt.

Die nach den beschriebenen Verfahren mit Polyurethan-Schaum beschichteten Teppiche verhalten sich nicht antistatisch, wie aus den Messungen der elektrischen Oberflächenwiderstände nach DIN 54 345 bei 25% relativer Luftfeuchte hervorgeht. Durch seine mangelhafte Leitfähigkeit wirkt der Polyurethanrücken einerseits als Isolierschicht zwischen Teppichflor und Estrich und verhindert selbst bei bester Leitfähigkeit des Polmaterials ein ausreichendes Ableiten der Ladung zur Erde. Andererseits kann wegen der schlechten Leitfähigkeit des Polyurethan-Schaumes die gebildete Ladungsmenge besonders bei Veloursqualitäten auch nicht über eine breite Oberfläche verteilt werden, so daß die entstandenen Spannungen verringert werden könnten. Die gemessenen Werte am Polyurethan-Schaum liegen bei $10^{13}$ bis $10^{14}$ Ohm. Auch bei Verwendung leitfähiger Fasern in der Polschicht wird kein ausreichender antistatischer Effekt erreicht, denn nach allgemeiner Auffassung sollten Flor- und Rückseite Oberflächenwiderstände von $10^{9}$ bis $10^{11}$ Ohm aufweisen, wenn es nicht zu Beanstandungen hinsichtlich des elektrostatischen Verhaltens von Textilböden kommen soll (S. Pfabe, Deutscher Färber-Kalender, 81, S. 336 – 348 [1977]).

Versuche, die bei den konventionellen Beschichtungsmassen auf Latexbasis verwendeten herkömmlichen Antistatika dem Polyurethan-Schaum zuzusetzen, scheitern daran, daß diese Additive mit den Polyurethan-Chemikalien, insbesondere den Diisocyanaten, nicht kompatibel sind. Es ist zwar aus

Vieweg und Höchtlen, Kunststoff-Handbuch, Bd. VII, Polyurethane, Carl Hanser-Verlag, München, 1966, S. 741,

bekannt, Polyurethane mit bestimmten Rußsorten so weit zu füllen, daß der Oberflächenwiderstand gesenkt wird und keine Gefahr einer elektrostatischen Aufladung mehr besteht. Allerdings sind zu einer wirksamen Senkung des Oberflächenwiderstandes ca. 30% Ruß auf Feststoffgehalt Polyurethan notwendig. Dieser hohe Rußgehalt führt neben der unerwünschten Farbgebung — insbesondere bei hellen Teppichböden — auch zu nachteiligen mechanischen Eigenschaften des Polyurethan-Schaumes.

Aufgabe der Erfindung ist daher die Verbesserung der elektrischen Leitfähigkeit von Polyurethan-Schäumen durch antistatisch wirksame Zusätze, die mit den zur Herstellung der Polyurethan-Schäume verwendeten Chemikalien verträglich sind und die Eigenschaften des Polyurethan-Schaums sowie der damit beschichteten Textilware nicht nachteilig beeinflussen.

Die erfindungsgemäß verwendeten Antistatika sollen möglichst keine freien Hydroxylgruppen mehr aufweisen, damit sie entsprechend ihrer Wirkung als Additive bei vorgegebenen Rezepturen nicht in den Mechanismus der Polyurethanbildung eingreifen können. So sollte die Hydroxylzahl einen Wert von 5 möglichst nicht überschreiten. Weiterhin sollten sie frei von Säuren und Basen sein, damit die Katalyse der Polyurethan-Reaktionen nicht gestört wird und Nebenreaktionen in unerwünschter Richtung vermieden werden.

Ein wichtiges Kriterium ist der Wassergehalt der erfindungsgemäß verwendeten Antistatika. Die Produkte sollten im allgemeinen nicht mehr als 10% Wasser enthalten, vorzugsweise jedoch wasserfrei sein. Da bei der Herstellung von Polyurethan-Schäumen üblicherweise Kohlendioxid als Treibmittel benutzt wird, das durch Reaktion von Wasser mit Isocyanatgruppen entsteht, muß der Wassergehalt der eingesetzten Antistatika in der Gesamtrezeptur bei der Herstellung des Polyurethan-Schaums berücksichtigt werden.

Schließlich sollen die erfindungsgemäßen Zusätze gut handhabbar, vorzugsweise flüssig und in der Diolkomponente löslich sein, damit eine gleichmäßige Verteilung während des Schaumvorganges gewährleistet ist. Die Lösung und homogene Verteilung der Antistatika in der Diolkomponente vor dem Mischen der Polyurethan-Chemikalien und dem anschließenden Aufschäumen ist nämlich die bevorzugte Art der Dosierung.

Die Aufgabe der Erfindung wird durch die Verwendung von Antistatika auf der Basis bestimmter endständig veresterter oder veretherter Alkylenoxidaddukte gelöst.

Gegenstand der Erfindung ist daher ein Verfahren zum Antistatischmachen von Polyurethan-Schäumen durch antistatischmachende Additive, dadurch gekennzeichnet, daß als antistatischmachende Additive endständig veresterte oder veretherte Alkylenoxidaddukte der allgemeinen Formel

$$R-(CHR'-CH_2O)_n-CHR'-CH_2R''$$

verwendet werden, in der

| | |
|---|---|
| R und R'', | die gleich oder verschieden sind, einen linearen oder verzweigten Alkoxirest mit 1 bis 22 C-Atomen, einen Alkylaryloxirest mit 10 bis 18 C-Atomen, einen Acyloxirest mit 1 bis 18 C-Atomen oder Halogen, |
| R' | Wasserstoff oder den Methylrest und |
| n | eine ganze Zahl zwischen 2 und 20 |

bedeuten.

Die der allgemeinen Formel zuzuordnenden Verbindungen stellen im wesentlichen Polyalkylenoxidaddukte dar, deren endständige Hydroxylgruppen durch geeignete Reaktionsschritte verethert oder verestert sind, so daß sie der Umsetzung mit den reaktiven Isocyanatgruppen während der eigentlichen Polyadditionsreaktion entzogen sind. Sie sind also am Mechanismus der Polyurethanbildung nicht beteiligt und stellen insofern inaktive Additive dar.

Wenn R für einen linearen oder verzweigten Alkoxirest steht, so weist dieser bevorzugt 1 bis 18 C-Atome, insbesondere 1 bis 13 C-Atome auf. Stehen R bzw. R'' für einen Halogenrest, so sind Chlor oder Brom bevorzugt. Besonders bevorzugt werden solche Verbindungen verwendet, in denen R und R' die oben angegebene Bedeutung haben, während R'' für einen linearen Alkoxirest mit 1 bis 4 C-Atomen, einen Acyloxirest mit 1 bis 18 C-Atomen oder Halogen, vorzugsweise Chlor oder Brom, steht. Die Zahl n der Alkylenoxideinheiten beträgt bevorzugt 5 bis 15, im Fall von Ethylenoxidaddukten werden 5 bis 10 Einheiten besonders bevorzugt.

Überraschenderweise hat sich herausgestellt, daß die erfindungsgemäß verwendeten Antistatika die mechanischen und andere physikalischen Eigenschaften der Polyurethan-Schäume nicht nachteilig beeinflussen, jedoch die elektrische Leitfähigkeit der Schäume erheblich verbessern.

Die erfindungsgemäß verwendeten Antistatika werden bevorzugt den Ausgangsmaterialien des Polyurethan-Schaums zugesetzt, und zwar werden die Antistatika wegen der homogenen Verteilung bevorzugt in der Diolkomponente vor dem Mischen der Diolkomponente mit der Diisocyanatkomponente und dem anschließenden Aufschäumen gelöst. Es ist aber auch möglich, das Antistatikum dem Diisocyanat zuzugeben, wenn genügende Mischbarkeit der Komponenten gegeben ist oder eine Entmischung durch mechanische Behandlung vermieden wird. Es können aber auch je nach

Verfahrensausbildung alle Komponenten einzeln dosiert werden.

Im allgemeinen liegt die Anwendungskonzentration der erfindungsgemäßen Antistatika bei 5 bis 30 Gew.-%, bezogen auf Polyurethan-Massen. Ein bevorzugter Anwendungsbereich umfaßt 10 bis 20 Gew.-% der antistatischmachenden Zusätze, bezogen auf Polyurethan. Selbstverständlich können mit den erfindungsgemäßen Antistatika Polyurethan-Schäume für sämtliche Einsatzgebiete antistatisch gemacht werden. Besonders bevorzugt ist jedoch die Verwendung für Polyurethan-Schäume, die als Teppichrückenbeschichtungsmassen oder zur Beschichtung von anderen Textilien eingesetzt werden.

Die Herstellung der Verbindungen der allgemeinen Formel

$$R-(CHR'-CH_2O)_n-CHR'-CH_2-R''$$

ist nicht Gegenstand der Erfindung und kann auf bekanntem Wege erfolgen.

Eine Möglichkeit besteht z. B. darin, Polyethylenglykole mit Carbonsäuren zu verestern, wobei die üblichen und bekannten Veresterungsmethoden angewendet werden können. Hierbei können lineare und verzweigte Carbonsäuren mit 1 bis 18 C-Atomen verwendet werden. Bevorzugt sind jedoch niedere Carbonsäuren wie z. B. Essigsäure, die wiederum bevorzugt in Form ihres Anhydrids zur Veresterung angewendet wird.

Die Veresterung kann auch mit anorganischen Säuren, z. B. Halogenwasserstoff, durchgeführt werden. Bevorzugt wird für die Substitution der Hydroxylgruppe durch z. B. Chlor jedoch die Umsetzung mit Thionylchlorid gewählt.

Die Veretherung der Polyalkylenoxidaddukte mit niederen Alkylresten wird hauptsächlich mit Hilfe der bekannten Alkylierungsreagentien wie z. B. Methylchlorid, Butylchlorid, Demethylsulfat oder Diethylsulfat durchgeführt.

Andererseits ist es möglich, zunächst einseitig veresterte oder veretherte Polyalkylenoxidaddukte dadurch aufzubauen, daß man an Carbonsäuren, Alkohole oder Alkylphenole Alkylenoxide nach bekannten Verfahren anlagert und anschließend die freie Hydroxylgruppe nach den beschriebenen Verfahren verestert oder verethert.

Die nach dieser Methode verwendeten Alkohole können linear oder verzweigt sein und enthalten 1 bis 22 C-Atome, wobei Alkohole mit 1 bis 18 C-Atomen, insbesondere 1 bis 13 C-Atomen, bevorzugt werden. Als Alkylphenole werden im wesentlichen die technisch zugänglichen Octyl- und Nonylphenole benutzt, wobei aber auch z. B. Butyl- und Dodecylphenole brauchbare Produkte liefern. Die verwendeten Carbonsäuren nach dieser Methode sind linear oder verzweigt und enthalten 1 bis 18 C-Atome.

Die Anzahl der Alkylenoxideinheiten in den Verbindungen der allgemeinen Formel

$$R-(CHR'-CH_2O)_n-CHR'-CH_2-R''$$

kann 2 bis 20 betragen, wobei 5 bis 15 Alkylenoxideinheiten bevorzugt werden. Im Falle der Ethylenoxidaddukte werden 5 bis 10 Einheiten besonders bevorzugt. Für die Gestaltung des Restes $R'=H$ oder $-CH_3$ kommen also Ethoxilate oder Propoxilate erfolgreich zum Einsatz; auch die Kombination von Ethylenoxid- und Propylenoxidresten in der Kette ist möglich. Dabei spielt es für die Wirksamkeit keine Rolle, ob sie regelmäßig in der Art eines Blockpolymerisates oder statistisch verteilt angeordnet sind.

In den nachfolgenden Beispielen wird die Herstellung von Polyurethan-Schäumen unter Zusatz der erfindungsgemäßen antistatischmachenden Mittel beschrieben. Aus der Messung der elektrischen Oberflächenwiderstände der Schaumstoffe nach DIN 54 345 ist die außergewöhnlich leitfähigkeitsverbessernde Wirkung der Additive im Vergleich zu dem nichtbehandelten Schaum ersichtlich:

## Beispiel 1

(Vergleich)

Die Arbeitsweise zur Herstellung eines Polyurethan-Schaumes nach der Rezeptur

| | |
|---|---|
| 200,0 Teile | Polyether auf der Basis Propylenoxid-Ethylenoxid vom Molekulargewicht ca. 4000 und einer Hydroxylzahl von 42 |
| 96,2 Teile | Isomerengemisch aus 80% 2,4- und 20% 2,6-Toluylendiisocyanat |
| 7,6 Teile | Wasser |
| 0,4 Teile | Triethylendiamin |
| 0,8 Teile | Zinndioctoat |
| 2,1 Teile | Polyalkylenglykolpolysiloxan |

ist folgende:

In einem hochformatigen Papierbecher von 500 ml Inhalt werden Polyetherpolyol, Wasser, Amin

und Polyetherpolysiloxan vorgelegt und unter Rühren vermischt. Als Rührer wird ein Blattrührer verwendet, der bis fast auf den Boden des Bechers reichen soll. Es wird 45 Sekunden bei 2000 U/min gerührt, wobei möglichst wenig Luft in die Flüssigkeit eingeschlagen werden sollte. Nach Zugabe des Zinndioctoats wird weitere 20 Sekunden gerührt. Danach wird das Diisocyanat schnell hinzugefügt und nach weiteren 7 Sekunden Rührzeit das in dem Becher befindliche Gemisch rasch in eine mit einer Polyethylenfolie ausgekleidete Form gegossen, in der der Schaum sofort zu treiben beginnt und die Form ausfüllt. Nach ca. 2 Minuten ist die Steigzeit beendet und der Schaum wird in der Form eine Stunde bei 75°C im Wärmeschrank belassen, bis er klebfrei ist. Der von der Folie befreite Schaumblock wird mittels einer Bandsäge in 1 cm breite Scheiben geschnitten, an denen nach 72stündiger Klimatisierung bei 25% relativer Feuchte und 23°C der elektrische Oberflächenwiderstand nach DIN 54 345 gemessen wird. Der Meßwert ist aus der nachfolgenden Tabelle ersichtlich.

## Beispiele 2 bis 20

Analog dem in Beispiel 1 beschriebenen Verfahren wurden Polyurethan-Schäume hergestellt, jedoch wurden der Polyetherkomponente vorher die in der Tabelle mit × bezeichneten Teile der antistatischmachenden Zusätze A bis K hinzugefügt. Die ausgehärteten Schäume wurden wiederum in 1 cm breite Scheiben geschnitten, an denen nach Klimatisierung die Oberflächenwiderstände gemessen wurden, die in der Tabelle aufgeführt sind.

Bei den Produkten A bis K handelt es sich um folgende Verbindungen:

A, B, C, D: Polyethylenglykole der mittleren Molekulargewichte 200, 300, 400 und 600, deren endständige Hydroxylgruppen mit Essigsäure verestert wurden. Die Hydroxylzahl der Produkte beträgt <5, die Säurezahl <1.

E, F: Monomethylether bzw. Monobutylether eines Polyethylenglykols vom mittleren Molekulargewicht 400, deren freie Hydroxylgruppen vollständig mit Essigsäure verestert wurden; OHZ<2, SZ<1.

G, H: Polyethylenglykole der mittleren Molekulargewichte 200 und 300, deren freie Hydroxylgruppen vollständig durch Chlor substituiert wurden.

I: Nonylphenolpolyglykolether, enthaltend 14 Mol Ethylenoxid, dessen freie Hydroxylgruppe vollständig mit Essigsäure verestert wurde.

K: Alkylpolyglykolether aus Isotridecylalkohol und 10 Mol Ethylenoxid, dessen freie Hydroxylgruppe vollständig mit Essigsäure verestert wurde.

Tabelle

Oberflächenwiderstände bei 25 % relativer Feuchte und 23°C von antistatisch ausgerüsteten Polyurethan-Schäumen.

| Beispiel | × Teile Additiv | Additiv | Oberflächenwiderstand in Ohm |
|---|---|---|---|
| 1 | – | – | $10^{14}$ |
| 2 | 30 | A | $8 \times 10^{11}$ |
| 3 | 60 | A | $3 \times 10^{11}$ |
| 4 | 30 | B | $3 \times 10^{11}$ |
| 5 | 60 | B | $5 \times 10^{10}$ |
| 6 | 30 | C | $8 \times 10^{11}$ |
| 7 | 60 | C | $5 \times 10^{11}$ |
| 8 | 30 | D | $5 \times 10^{11}$ |
| 9 | 60 | D | $9 \times 10^{10}$ |
| 10 | 30 | E | $3 \times 10^{10}$ |
| 11 | 47 | E | $2 \times 10^{10}$ |

Fortsetzung

| Beispiel | × Teile Additiv | Additiv | Oberflächen-widerstand in Ohm |
|---|---|---|---|
| 12 | 30 | F | $5 \times 10^{10}$ |
| 13 | 30 | G | $5 \times 10^{10}$ |
| 14 | 60 | G | $1 \times 10^{10}$ |
| 15 | 90 | G | $2 \times 10^{9}$ |
| 16 | 30 | H | $5 \times 10^{10}$ |
| 17 | 30 | I | $7 \times 10^{11}$ |
| 18 | 60 | I | $5 \times 10^{11}$ |
| 19 | 30 | K | $6 \times 10^{11}$ |
| 20 | 60 | K | $1 \times 10^{11}$ |

**Patentansprüche**

1. Verfahren zum Antistatischmachen von Polyurethan-Schäumen, dadurch gekennzeichnet, daß als Antistatika veresterte oder veretherte Alkylenoxidaddukte der allgemeinen Formel

$$R-(CHR'-CH_2O)_n-CHR'-CH_2R''$$

verwendet werden, in der

| | |
|---|---|
| R und R″, | die gleich oder verschieden sind, einen linearen oder verzweigten Alkoxirest mit 1 bis 22 C-Atomen, einen Alkylaryloxirest mit 10 bis 18 C-Atomen, einen Acyloxirest mit 1 bis 18 C-Atomen oder Halogen, |
| R′ | Wasserstoff oder den Methylrest und |
| n | eine ganze Zahl zwischen 2 und 20 |

bedeuten.

2. Verfahren nach Anspruch 1, dadurch gekennzeichnet, daß die Antistatika den Ausgangsmaterialien für die Polyurethan-Schaumerzeugung zugesetzt werden.

3. Verfahren nach Anspruch 2, dadurch gekennzeichnet, daß die Antistatika der Diolkomponente vor dem Vermischen mit der Diisocyanatkomponente zugegeben werden.

4. Verfahren nach Ansprüchen 2 oder 3, dadurch gekennzeichnet, daß die Antistatika in der Diolkomponente gelöst werden.

5. Verfahren nach Ansprüchen 1 bis 2, dadurch gekennzeichnet, daß die Antistatika der Diisocyanatkomponente zugesetzt werden.

6. Verfahren nach Anspruch 1, dadurch gekennzeichnet, daß Diolkomponente, Diisocyanatkomponente und Antistatika einzeln dosiert werden.

7. Verfahren nach Ansprüchen 1 bis 6, dadurch gekennzeichnet, daß die Antistatika in Mengen von 5 bis 30 Gew.-%, vorzugsweise von 10 bis 20 Gew.-%, bezogen auf die Polyurethanmasse, angewendet werden.

8. Verwendung der nach den Ansprüchen 1 bis 7 antistatisch ausgerüsteten Polyurethan-Schäume als Textilbeschichtungsmasse, vorzugsweise als Teppichrückenbeschichtungsmasse.

**Claims**

1. Process for rendering polyurethane foams antistatic, characterised in that, as the antistatic agents, there are used esterified or etherified alkylene oxide adducts of the general formula

$$R-(CHR'-CH_2O)_n-CHR'-CH_2R''$$

in which

R and R″, which are the same or different, represent a linear or branched alkoxy radical having from 1 to 22 carbon atoms, an alkylaryloxy radical having from 10 to 18 carbon atoms, an acyloxy radical having from 1 to 18 carbon atoms or halogen,
R′ represents hydrogen or a methyl radical and
n represents an integer between 2 and 20.

2. Process according to claim 1, characterised in that the antistatic agents are added to the starting materials for the production of the polyurethane foams.
3. Process according to claim 2, characterised in that the antistatic agents are added to the diol component before it is mixed with the diisocyanate component.
4. Process according to claim 2 or 3, characterised in that the antistatic agents dissolved in the diol component.
5. Process according to claims 1 and 2, characterised in that the antistatic agents are added to the diisocyanate component.
6. Process according to claim 1, characterised in that the diol component, the diisocyanate component and the antistatic agents are metered in individually.
7. Process according to claims 1 to 6, characterised in that the antistatic agents are used in amounts of from 5 to 30% by weight, preferably from 10 to 20% by weight, based on the polyurethane composition.
8. Use of the polyurethane foams which have been rendered antistatic in accordance with claims 1 to7 as a textile-coating substance, preferably as a coating substance for the back of carpets.

**Revendications**

1. Procédé pour rendre antistatiques des mousses de poly-uréthannes, caractérisé en ce que l'on emploie comme apprêts antistatiques des produits d'addition d'oxydes d'alcoylène estérifiés ou éthérifiés de la formule générale

$$R-(CHR'-CH_2O)_n-CHR'-CH_2R'' ,$$

dans laquelle

R et R″, qui peuvent être identiques ou différents, représentent chacun un radical alcoxy linéaire ou ramifié en $C_1$ à $C_{22}$, un groupe alcoyl-aryl-oxy en $C_{10}$ à $C_{18}$ ou un groupe acyl-oxy en $C_1$ à $C_{18}$, ou un atome d'halogène;
R′ désigne un atome d'hydrogène ou un radical méthyle et
n est un nombre entier valant 2 à 20.

2. Procédé suivant la revendication 1, caractérisé en ce que les apprêts antistatiques sont incorporés aux matières de départ pour la production de poly-uréthanne expansé.
3. Procédé suivant la revendication 2, caractérisé en ce que les apprêts antistatiques sont incorporés au composant diol avant le mélange de celui-ci avec le composant diisocyanate.
4. Procédé suivant l'une des revendications 2 et 3, caractérisé en ce que les apprêts antistatiques sont dissous dans le composant diol.
5. Procédé suivant l'une des revendications 1 et 2, caractérisé en ce que les apprêts antistatiques sont incorporés au composant diisocyanate.
6. Procédé suivant la revendication 1, caractérisé en ce que le composant diol, le composant diisocyanate et l'apprêt antistatique sont dosés séparément.
7. Procédé suivant l'une des revendications 1 à 6, caractérisé en ce que les apprêts antistatiques sont employés en des proportions de 5 à 30% et de préférence de 10 à 20% en poids par rapport à la masse de polyuréthanne.
8. Utilisation de mousses de poly-uréthanne, rendues antistatiques par le procédé suivant l'une des revendications 1 à 7, comme masses d'enduction de matières textiles, en particulier de masses de revêtement de dossiers de tapis.